# EUROPEAN PATENT SPECIFICATION

(11) **EP 4 393 292 B1**
(45) Date of publication and mention of the grant of the patent: **08.10.2025**
(21) Application number: 22217048.2
(22) Date of filing: 28.12.2022
(51) Int. Cl.: A01D 41/14

(54) **HEADER ASSEMBLY FOR AN AGRICULTURAL VEHICLE**
VORSATZANORDNUNG FÜR EIN LANDWIRTSCHAFTLICHES FAHRZEUG
ENSEMBLE COLLECTEUR POUR VÉHICULE AGRICOLE

(43) Date of publication of application: 03.07.2024
(73) Proprietor: CNH Industrial Belgium N.V., 8210 Zedelgem (BE)
(72) Inventor: VERFAILLIE, Glennys, 8490 Jabbeke (BE); SYRYN, Wim, 8650 Klerken (BE)
(74) Representative: CNH Industrial IP Department

(56) References cited:
- EP-A2- 2 156 725
- WO-A1-2022/006280
- US-A1- 2019 200 523
- US-A1- 2021 153 434
- US-B1- 7 971 420

## Description

### Field

The present disclosure relates to a header assembly for an agricultural vehicle and more particularly to a header assembly comprising at least one gauge wheel.

### Background

Agricultural headers (headers) can be coupled to the front of an agricultural vehicle and used to process crops, for example cutting the crops and feeding them into an agricultural vehicle such as a harvester. Headers are typically supported at their centre by a coupling to the agricultural vehicle. Headers can be many tens of meters wide and therefore can present issues in relation to the load on the agricultural vehicle and uneven surfaces over the width of the header. Therefore, headers may include one or more gauge wheels to support the weight of the header.

Document US 2019/200523 A1 discloses a header assembly for an agricultural vehicle according to the preamble of claim 1.

### Summary

The present invention is defined by the appended claims.

There is provided a header assembly for an agricultural vehicle, the header assembly comprising:
a header comprising a lower surface; and
at least one gauge wheel assembly comprising:
a gauge wheel; and
a coupling mechanism coupling the gauge wheel to the header, the coupling mechanism including:
   a hydraulic cylinder configured to selectively extend from a retracted configuration towards an extended configuration to urge a lower edge of the gauge wheel below and away from the lower surface of the header; and
   a biasing element arranged to bias the hydraulic cylinder to the retracted configuration.

When the hydraulic cylinder is in the extended configuration, the hydraulic cylinder may position the lower edge of the gauge wheel below the lower surface of the header. In the extended configuration, the coupling mechanism may arrange the gauge wheel for contacting a ground surface to provide support to at least a portion of the weight of the header.

In the retracted configuration, the hydraulic cylinder may position the lower edge of the gauge wheel above a lower edge of the header. In the retracted configuration, the hydraulic cylinder may arrange the gauge wheel adjacent to a rear side of the header for transportation of the header between operations.

The hydraulic cylinder may be configured to selectively extend to urge the gauge wheel towards the ground surface and the biasing element may be arranged to urge the gauge wheel away from a ground surface. The hydraulic cylinder may be configured to selectively extend to urge the gauge wheel towards the ground surface and the biasing element may be arranged to urge the gauge wheel away from a ground surface, when the header assembly is oriented in an operating orientation.

The hydraulic cylinder may be configured to selectively extend to urge the gauge wheel away from the header. The biasing element may be arranged to retract the gauge wheel back towards the header.

The biasing element may be arranged to bias the hydraulic cylinder to the retracted configuration in the absence of the selective extension.

The biasing element may be arranged within the hydraulic cylinder.

The header assembly may comprise a hydraulic system configured to selectively provide a fixed pressure to the hydraulic cylinder to selectively extend the hydraulic cylinder towards the extended configuration.

The hydraulic system may comprise at least one accumulator for charging to the fixed pressure, such that the at least one accumulator maintains the fixed pressure in the hydraulic cylinder.

The hydraulic system may comprise a two-position valve for selectively isolating the at least one accumulator and the hydraulic cylinder from the rest of the hydraulic system.

The hydraulic system may comprise a pressure set-point control valve configured to set a value of the fixed pressure.

The two-position valve may be arranged to selectively isolate the at least one accumulator and the hydraulic cylinder from the pressure set point control valve.

The pressure set-point control valve may comprise an adjustable pressure reducing valve.

The pressure set-point control valve may be configured to receive a pressure set-point signal for setting a pressure set-point of the pressure set point control valve corresponding to the value of the fixed pressure.

The header assembly may comprises a controller, wherein the controller is configured to:
receive a height setting signal; and
output a pressure set-point signal for setting a pressure set-point of the pressure set point control valve, based on the height setting signal.

The controller may receive the height setting signal from an operator control unit.

The header assembly may comprise a position sensor for monitoring an extension of the hydraulic cylinder. The height setting signal may comprises a height set-point and the controller may be configured to:
receive a position sensor signal from the position sensor;
output the pressure set-point signal to adjust the pressure set-point until the position sensor signal indicates an extension of the hydraulic cylinder corresponding to the height set-point.

The height setting signal may comprise a height set point and the controller may be configured to:
calculate the pressure set-point based on the height set-point and a predetermined relationship between the pressure set point and the height set point; and
output the pressure set-point signal to the pressure set-point control valve based on the calculated pressure set-point.

The header assembly may comprise a pressure sensor for monitoring the value of the fixed pressure. The height setting signal may comprise a height set point and the controller may be configured to:
calculate the value of the fixed pressure based on the height set-point and a predetermined relationship between the value of the fixed pressure and the height set point;
receive a pressure sensor signal from the pressure sensor; and
output the pressure set-point signal to adjust the pressure set-point until the pressure sensor signal indicates a pressure corresponding to the value of the fixed pressure.

The header assembly may comprise a two-position valve arranged to selectively couple the pressure set-point control valve to the accumulator and the hydraulic cylinder. The controller may be configured to:
control the two-position valve to couple the pressure set-point control valve to the accumulator and the hydraulic cylinder; and
control the two-position valve to isolate the pressure set-point control valve from the accumulator and the hydraulic cylinder.

The header assembly may comprise at least one sensor, wherein the at least one sensor comprises:
a position sensor for sensing an extension of the hydraulic cylinder; and
one or more pressure sensors for sensing a pressure of the hydraulic system.

The header assembly may comprise a controller configured to output a height indication signal based on a sensor signal from the at least one sensor.

The at least one gauge wheel assembly may comprise a first gauge wheel assembly positioned at a first end of the header and a second gauge wheel assembly positioned at a second end of the header, opposite the first end.

The at least one accumulator may comprise a first accumulator for maintaining a fixed pressure in the hydraulic cylinder of the first gauge wheel assembly and a second accumulator for maintaining a fixed pressure in the hydraulic cylinder of the second gauge wheel assembly.

### Brief Description of the Drawings

One or more embodiments will now be described by way of example only with reference to the accompanying drawings in which:
Figure 1 illustrates an example header assembly;
Figure 2A illustrates a header assembly with a gauge wheel assembly arranged in an operating configuration according to an embodiment of the present disclosure;
Figure 2B illustrates the header assembly of Figure 2A with the gauge wheel assembly arranged in a transport configuration according to an embodiment of the present disclosure; and
Figure 3 illustrates a hydraulic system for a header assembly according to an embodiment of the present disclosure.

### Detailed Description

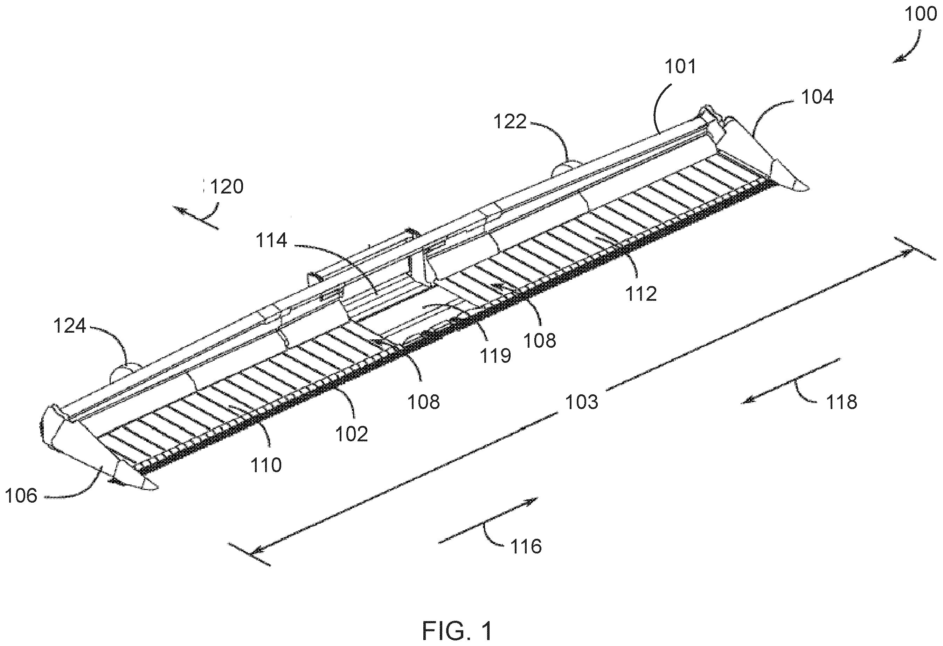

Figure 1 is a top perspective view of an example header assembly 100. The header assembly 100 includes a header 101 that may be removably coupled to an agricultural vehicle, for example a combine harvester or a forage harvester. The header 101 includes a cutter bar 102 that extends across a width 103 of the header 101 between side portions 104, 106 of the header 101. When the agricultural vehicle is in operation, blades of the cutter bar 102 engage and cut crops. In this example, the portions of the crops that are cut may be directed onto a conveyor 108 of the header 101 by a reel assembly (not shown). The conveyor 108 includes a first conveyor section 110 and a second conveyor section 112. In general, the conveyor 108 is configured to transport cut crops toward an inlet 114. As an example, the first conveyor section 110 may direct the crops in a first direction 116 toward a centre section 119, and the second conveyor section 112 may direct the crops in a second direction 118 toward the centre section 119. The centre section 119 may then direct the crops to the inlet 114 in a third direction 120 toward a crop processing system of the agricultural vehicle. The first direction 116 and the second direction 118 can be considered as a longitudinal dimension of the header 101. The third direction 120 can be considered as being in a transverse dimension of the header 101. A fourth direction (not shown) can define a vertical dimension of the header 101 which is perpendicular to a ground surface during operation of the header 101.

The header assembly 100 also includes a first gauge wheel 122 and a second gauge wheel 124 to facilitate movement of the header 101 along the ground during operation. The gauge wheels 122, 124 may engage the ground to control a height of the header 101. The first gauge wheel 122 is positioned towards a first end of the header 101, in other words between the centre section 119 and the first side portion 104. The second gauge wheel 124 is positioned towards a second end of the header 101, in other words, between the centre section 119 and the second side portion 106. In this way, the first and second ends are spaced apart from each in other in the longitudinal dimension of the header 101.

It will be appreciated that other example headers are known and the invention is not limited to the example of Figure 1. For example, the header assembly may comprise an auger header or a corn header.

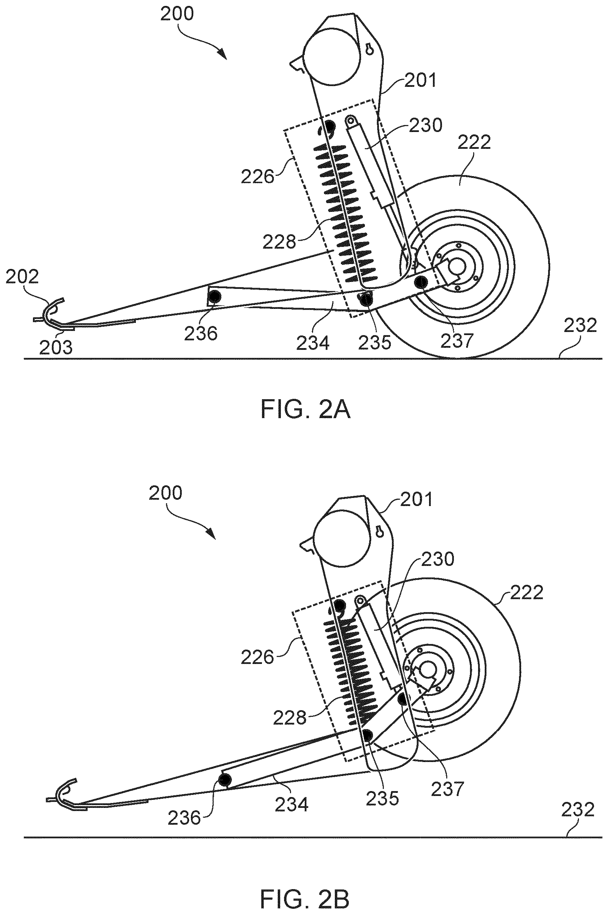

Figures 2A and 2B illustrate a cross-sectional view of a header assembly 200 for an agricultural vehicle according to an embodiment of the present disclosure. Features of Figures 2A and 2B that are also present in Figure 1 have been given corresponding numbers in the 200 series and are not necessarily described again here.

The header assembly 200 includes at least one gauge wheel assembly comprising a gauge wheel 222. Figure 2A illustrates the gauge wheel assembly in an operating configuration and Figure 2B illustrates the gauge wheel assembly in a transport configuration.

The operating configuration defines a position of the gauge wheel assembly when the header 201 is operating, i.e. processing crops. In the operating configuration, the gauge wheel 222 contacts a ground surface 232 and supports at least a portion of the weight of the header 201. In the operating configuration, a lower edge of the gauge wheel 222 may be positioned below a lower surface 203 of the header 201, such that the gauge wheel 222 supports the weight of the header 201, when the header is oriented in a normal operating orientation (with the longitudinal dimension parallel to the ground surface 232, as depicted in Figures 1 and 2). The lower surface 203 of the header 201 may comprise a lower surface or lower edge of the cutter bar 202. The operating configuration may comprise the gauge wheel 222 extended towards the ground surface 232 and/or away from the header 201. It will be appreciated that the operating configuration may correspond to a range of positions (or range of configurations) of the gauge wheel 222 with a lower edge of the gauge wheel 222 below the lower surface 203 (or extended towards the ground surface 232). As described below, the range of positions enables variation of the position of the gauge wheel depending on properties of the process (e.g. required cut height), properties of the header (e.g. size, weight) and the ground surface 232, e.g. soil moisture, compactness etc.

The transport configuration, shown in Figure 2B, defines a storage position or transport position of the gauge wheel 222 and gauge wheel assembly during transport of the header. For example, between operations the header assembly 200 may be detached from the agricultural vehicle and transported on a trailer or transported to a storage location using a fork etc. In the transport configuration, it can be advantageous for the gauge wheel 222 to not provide support to the header 201 to avoid the header rolling around on a trailer or in storage. It is also advantageous for the header assembly to be more compact for transport by retracting the gauge wheel assembly towards a rear of the header 201. In the transport configuration, the gauge wheel 222 is stowed in a transport position. In the transport configuration, the lower edge of the gauge wheel 222 may be positioned above the lower surface 203 of the header 201, such that the gauge wheel 222 does not support the weight of the header 201 when the header is oriented in the normal operating orientation. The transport configuration may comprise the gauge wheel 222 positioned adjacent to, or tucked in behind, a rear side of the header 201 and/or retracted away from the ground surface 232. The gauge wheel 222 may be positioned further from a rear of the header 201 and closer to the ground surface 232 in the operating configuration than in the transport configuration.

As shown in Figures 2A and 2B, the gauge wheel assembly includes the gauge wheel 222 and a coupling mechanism 226 for coupling the gauge wheel 222 to the header 201. The coupling mechanism 226 includes a hydraulic cylinder 230. The hydraulic cylinder 230 in this example couples the header 201 to the gauge wheel 222. The hydraulic cylinder 230 is configured to selectively extend from a retracted configuration towards an extended configuration to urge the lower edge of the gauge wheel 222 below and away from the lower surface 203 of the header 201. The coupling mechanism 226 further includes a biasing element 228. In this example the biasing element 228 is a coiled spring. The biasing element 228 is arranged to bias the hydraulic cylinder 230 towards the retracted configuration.

The arrangement of the coupling mechanism 226 advantageously allows: (i) selective transition of the gauge wheel assembly from the transport configuration to the operating configuration by selectively applying pressure to the hydraulic cylinder 230; and (ii) automatic return of the gauge wheel assembly to the transport position when pressure is selectively removed form the hydraulic cylinder 230 and the bias of the biasing element 228 retracts the hydraulic cylinder 230.

The retracted configuration of the hydraulic cylinder 230 may correspond to the transport configuration of the gauge wheel assembly. In other words, when the hydraulic cylinder is in the retracted configuration, the coupling mechanism 226 / hydraulic cylinder 230 may position the gauge wheel assembly in the transport position.

As noted above, the operating configuration of the gauge wheel assembly may correspond to a range of gauge wheel positions. The extended configuration of the hydraulic cylinder 230 may refer to a complete extension of the hydraulic cylinder 230 (which may be limited by a mechanical stop). In such examples, the operating configuration may correspond to any extension of the hydraulic cylinder 230, other than the retracted configuration, that provides the lower edge of the gauge wheel 222 below the lower surface 203 of the header 201. By extending from the retracted configuration towards the extended configuration, the coupling mechanism / hydraulic cylinder 230 may urge the gauge wheel assembly into the operating configuration.

Selective extension of the hydraulic cylinder towards the extended configuration may be provided by selectively applying a pressure to the hydraulic cylinder, resulting in an extension force. In this way, the hydraulic cylinder 230 may selectively apply the extension force to urge the gauge wheel assembly into the operating configuration.

The biasing element may provide a biasing force to urge the hydraulic cylinder 230 to the retracted configuration (and the gauge wheel assembly into the transport position). The biasing force may be in the opposite direction to the extension force. The biasing force may vary depending on a compression state or extension state of the biasing element (e.g. for a spring). The biasing force may have a minimum value (a retracted biasing force) when the hydraulic cylinder 230 is in the retracted configuration and may increase as the hydraulic cylinder extends towards the extended configuration (to an extended biasing force). The extension force may be set to an appropriate value greater than the retracted biasing force. As a result, when the hydraulic cylinder 230 selectively extends and applies the extension force, the gauge wheel assembly moves into the operating configuration because the extension force overcomes the biasing force of the biasing element 228. The hydraulic cylinder 230 may continue to extend towards the extended configuration until either: (i) a sum of the (potentially increasing) biasing force and any ground reaction force (resulting from contact of the gauge wheel 222 with the ground surface 232) balances the extension force; or (ii) the hydraulic cylinder reaches the extended configuration (which may be limited by a mechanical stop).

In some examples, the gauge wheel 222 contacts the ground surface 232 and the hydraulic cylinder 230 (and gauge wheel assembly) continues to extend until a sum of the ground reaction force and the biasing force equals the extension force. Therefore, adjusting the extension force can adjust a total extension of the cylinder 230 / gauge wheel assembly and a clearance height of the header 201 from the ground surface 232. When the hydraulic cylinder 230 does not apply the extension force, the biasing force retracts the hydraulic cylinder 230 to the retracted configuration and the gauge wheel assembly returns to the transport configuration. In this way, selective activation of the hydraulic cylinder 230 can: (i) move the hydraulic cylinder from the retracted configuration towards the extended configuration; and (ii) move the gauge wheel assembly from the transport configuration to the operating configuration. Similarly, selective deactivation of the hydraulic cylinder 230 can automatically: (i) move the hydraulic cylinder 230 away from the extended configuration and towards the retracted configuration; and (ii) move the gauge wheel assembly from the operating configuration to the transport configuration.

In this example, the gauge wheel assembly also includes a connecting arm 234. A first end of the connecting arm 234 is pivotally connected to the header 201 at a pivot point 236. A second end of the connecting arm 234 connects to the gauge wheel 222. The biasing element 228 is connected between the header 201 and a biasing element connection point 235 on the connecting arm 234. The hydraulic cylinder 230 extends between the header 201 and a hydraulic connection point 237 on the connecting arm 234. In this example, the biasing element connection point 235 and the hydraulic connection point 237 are located between the first and second ends of the connecting arm 234. It will be appreciated that other arrangements are possible for connecting the biasing element 228 and the hydraulic cylinder 230 between the header 201 and the first gauge wheel 222. For example, the connecting arm 234 may be omitted and the biasing element 228 and the hydraulic cylinder 230 may connect directly to the gauge wheel 222. In some examples, the biasing element 228 may be housed within the hydraulic cylinder 230 and arranged to urge the hydraulic cylinder 230 towards the retracted configuration and the gauge wheel assembly 222 towards the transport configuration.

In Figure 2A, a hydraulic system (discussed below) applies pressure to the hydraulic cylinder 230 such that the cylinder 230 extends towards the extended configuration and applies an extension force to the gauge wheel 222 that is greater than the retracted biasing force of the biasing element 228. As a result, the connecting arm 234 of the gauge wheel assembly pivots the assembly into the operating configuration such that the gauge wheel 222 contacts the ground surface 232.

In Figure 2B, the hydraulic system discharges pressure from the hydraulic cylinder 230 thereby removing the extension force. The biasing force of the biasing element 228 retracts the hydraulic cylinder 230 to the retracted configuration and the gauge wheel assembly 222 pivots into the transport configuration.

The header assembly 200 may comprise a pair of gauge wheel assemblies. For example, the header assembly 200 may include a first gauge wheel assembly positioned at (or towards) a first end of the header 201 and a second gauge wheel assembly position at (or towards) a second end of the header 201, wherein the first and second ends are separated along the longitudinal dimension of the header (as illustrated in Figure 1). Headers can be wide in the longitudinal dimension (e.g. 40 metres). Providing two gauge wheel assemblies (or more), with one at each end of the header 201, can enable the header assembly 200 to remain level when there is an uneven ground surface 232 across the long width of the header 201 in the longitudinal dimension. As discussed below, the extension force may be provided by applying and maintaining a fixed pressure in the hydraulic cylinder 230 of each gauge wheel assembly. By maintaining a fixed pressure in the hydraulic cylinder 230, each hydraulic cylinder 230 / gauge wheel assembly will retract or extend in response to bumps or dips in the ground surface 232 due to the corresponding variation in ground reaction force. As a result, the header 201 can maintain a fixed clearance height above the ground surface 232 across the width of the header 201. This advantageously avoids an end of the header 201 digging into the ground surface 232, which can result in damage to the header 201 and/or soil contamination in the harvested crop.

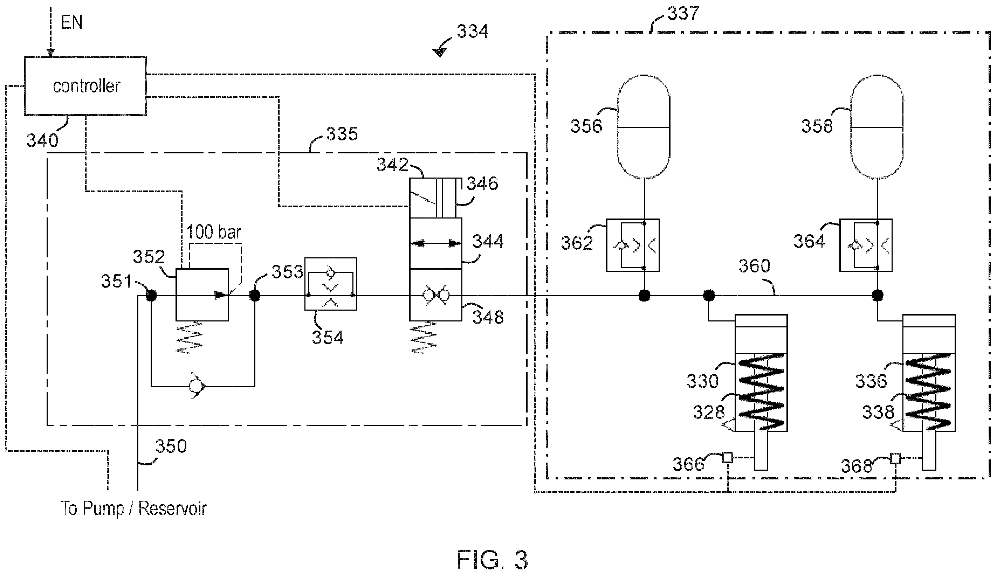

The header assembly 200 may include a hydraulic system for selectively applying the extension force to the hydraulic cylinder 230. Figure 3 illustrates an example hydraulic system 334 according to an embodiment of the present disclosure. The illustrated hydraulic system 334 is for a header assembly including two gauge wheel assemblies, such as the header assembly of Figure 1.

The hydraulic system 334 is configured to selectively provide, and maintain, a fixed pressure (which may be referred to as a fixed pressure value) to both a first hydraulic cylinder 330 (of a first gauge wheel assembly) and a second hydraulic cylinder 336 (of a second gauge wheel assembly). In this example, chambers of the first and second hydraulic cylinders 330, 336 comprise a respective first biasing element 328 and second biasing element 338.

In this example, the hydraulic system 334 comprises a charge/discharge module 335 and a cylinder control module 337. The charge/discharge module 335 comprises a system input 350 for coupling to a hydraulic pump or reservoir (not shown). The pump and reservoir may form part of a separate hydraulic system such as a hydraulic system of the agricultural vehicle. The system input 350 is connected to an input 351 of a pressure set-point control valve 352. An output of the pressure set-point control valve 352 is connected to a two-position valve 342 via a relief valve 354. An output of the two-position valve 342 connects to a supply line 360 of the cylinder control module 337.

The cylinder control module 337 comprises the first hydraulic cylinder 330 and the second hydraulic cylinder 336. A chamber end of each of the first and second hydraulic cylinders 330, 336 is connected to the supply line 360. In this example, the cylinder control module 337 further comprises a first accumulator 356 for controlling a pressure of the first hydraulic cylinder 360 and a second accumulator 358 for controlling a pressure of the second hydraulic cylinder 336. The first and second accumulators 356, 358 are connected to the supply line 360 proximal or close to (within a threshold distance of) the respective first and second hydraulic cylinders 330, 336. Although each accumulator 356, 358 is effectively in fluid communication with each hydraulic cylinder 330, 336, in reality the first accumulator 356 and the first hydraulic cylinder 330 will be co-located at a first end of the header (with the first gauge wheel assembly) and the second accumulator 358 and second hydraulic cylinder 336 will be co-located at the second end of the header (with the second gauge wheel assembly). As headers are typically tens of meters long, each of the first and second accumulators 356, 358 have a negligible influence on the hydraulic cylinder at the other end of the header. In other examples, a single accumulator may maintain the fixed pressure in the first and second hydraulic cylinders 330, 336. The single accumulator may be positioned equidistant between the first and second hydraulic cylinders 330, 336 or may be located proximal to (within a threshold distance of) one of the hydraulic cylinders 330, 336 with a suitable restriction in the connection to the one hydraulic cylinder, such that each hydraulic cylinder 330, 336 has a similar interaction with the single accumulator. In this example, the first and second accumulators 356, 358 may be connected to the supply line 360 by a respective first and second one way restriction valve 362, 364. It will be appreciated, that although the first and second hydraulic cylinders 330, 336 are arranged in series in this example, in other examples they may be arranged in parallel, with each respective accumulator 356, 358 connected to the respective branch. A parallel arrangement may be more appropriate in shorter headers to provide isolation of the first accumulator 356 from the second hydraulic cylinder 336, and of the second accumulator 358 from the first hydraulic cylinder 330. It will be appreciated that further variations are possible. For example, with reference to the illustrated example, in some example, the first accumulator 356 may not be directly connected to the supply line 360 and instead be connected to a line connecting the supply line 360 to the first hydraulic cylinder 330. Such an arrangement can improve isolation of the first accumulator 356 from the second hydraulic cylinder 336, and of the second accumulator 358 from the first hydraulic cylinder 330.

In this example a controller 340 controls the hydraulic system 334. The controller 340 configures the hydraulic system 334 / hydraulic cylinders 330, 336 to selectively apply the extension force / fixed pressure. The controller 340 may form part of the hydraulic system 334, the header assembly, the agricultural vehicle or its functionality may be distributed across two or more of the hydraulic system 334, the header assembly and the agricultural vehicle.

The hydraulic system 334 may include one or more sensors for monitoring a state of the hydraulic system 334. The hydraulic system 334 may comprise one or more pressure sensors (not shown) for indicating a pressure in the hydraulic system 334 and/or one or more position sensors 366, 368 for indicating an extension of one or both hydraulic cylinders 330, 336 and the corresponding header height. The one or more pressure sensors may form part of the pressure set-point control valve 352 and/or may be positioned in the cylinder control module 337, for example a pressure sensor may be positioned in the chamber of one or both hydraulic cylinders 330, 336. First and second position sensors 366, 368 may be arranged to monitor the extension of the respective hydraulic cylinder 330, 336. Measuring the extension of one or both hydraulic cylinders can advantageously provide a direct measurement of the clearance height of the header. The controller 340 may receive sensor signals from the one or more sensors to monitor the state of the hydraulic system 334.

Operation of the hydraulic system and gauge wheel assembly will be described with reference to four phases: (i) transition of gauge wheel assemblies from the transport configuration to the operating configuration; (ii) operation of the header with the gauge wheel assemblies in the operating configuration; (iii) adjustment of the fixed pressure value / header height; and (iv) transition of the gauge wheel assemblies from the operating configuration to the transport configuration.

In the first phase, the gauge wheel assemblies are initially in the transport configuration, with the first and second hydraulic cylinders 330, 336 in the retracted configuration. There is little to no pressure in the hydraulic system 334 and therefore no extension force is applied to either hydraulic cylinder 330, 336. As a result, the retracted biasing force of the biasing elements 328, 338 maintain the retraction of the first and second hydraulic cylinders 330, 336 such that the gauge wheel assemblies are retained in the transport configuration. The two-position valve 342 resides in a (default) closed position 348 which isolates the cylinder control module 337.

At a first time, for example when an operator has connected the header assembly to the agricultural vehicle and is ready to begin harvesting, the controller 340 sets the two-position valve 342 of the hydraulic system 334 into an open position 344. The controller 340 may set the two-position valve in response to an enable signal, EN, received from a user input, for example from an operator control unit in an operator cab of the agricultural vehicle. The controller may set the two-position valve 342 in response to the enable signal, EN, and a sensor signal from the one or more sensors indicating that the pressure is less than the fixed pressure value (e.g. a pressure signal from a pressure sensor in the cylinder control module 337 or a position signal from a position sensor 366, 368 indicating one or both cylinders 330, 336 are in the retracted configuration).

In this example, the controller 340 sets the two-position valve 342 into the open position 344 by actuating a solenoid 346 of the two-position valve 342. In other examples, an operator may manually actuate the two-position valve 342, for example via a pedal or lever in the cab of the agricultural vehicle. In response to the enable signal, EN, (and the sensor signal) the controller 340 may also activate a pump (not shown) connected to the input 350 of the hydraulic system 340. Activation of the pump may comprise supplying power to the pump and/or controlling a switch to connect the pump to the input 350 of the hydraulic system. The pump applies pressure to the hydraulic system 334 and charges the hydraulic system 334.

In this example, the hydraulic system 334 includes the pressure set-point control valve 352 for controlling a value of the fixed pressure (100 bar in this example). The pressure set-point control valve 352 may comprise a pressure reducing valve. A pressure set-point of the pressure set-point control valve 352 may be set to the fixed pressure value (or a value offset from the fixed pressure value to allow for any pressure drop along the supply line 360). Initially, with the hydraulic system 334 at low pressure, the pump increases the pressure in the hydraulic system 334. Once the pressure at the input 351 of the pressure set-point control valve 352 reaches the pressure set-point, the pressure set-point control valve 352 fixes the pressure at the output 353 of the pressure set-point control valve 352 to the pressure set-point, irrespective of a further increase in pressure at the input 351. As a result, the pressure set-point control valve 352 sets a fixed pressure in the cylinder control module 337 and the accumulators 356, 358 are charged to the fixed pressure value.

As the pressure in the hydraulic system 334 increases, the extension force of the hydraulic cylinders 330, 336 increases. Once the extension force is greater than the retracted biasing force of the respective biasing element 328, 338, the hydraulic cylinders 330, 336 extend towards the extended configuration and urge the gauge wheel assemblies towards the operating configuration. Once the pressure in the hydraulic system 334 reaches the fixed pressure value, a fixed extension force extends the gauge wheel assemblies until the sum of the biasing force and any ground reaction force equal the extension force.

In this example, the hydraulic system 334 comprises a relief valve 354 connecting the output 353 of the pressure set-point control valve 352 to the two-position valve 342. The relief valve 354 comprises a restriction that dampens the rate of the pressure increase in the cylinder control module 337 and thereby the rate at which the hydraulic cylinders 330, 336 extend the gauge wheel assemblies into the operating configuration (to reduce the risks of accidents or damage resulting from a rapidly moving assembly).

In response to the one or more sensor signals indicating that the cylinder control module 337 has reached the fixed pressure value and the hydraulic cylinders 330, 336 have extended the gauge wheel assemblies into the operating configuration, the controller may return the two-position valve 342 to the closed position 348, isolating the cylinder control module 337 from the rest of the hydraulic system 334. The controller may deactivate the pump and/or may disconnect the pump from the hydraulic system 334.

In the second phase, the gauge wheel assemblies are maintained in the operating configuration as the agricultural vehicle processes crops with the header assembly 201. As the two-position valve 342 is in the closed position, the cylinder control module is isolated from the rest of the hydraulic system 334 and has a pressure equal to the fixed pressure value.

With the cylinder control unit 337 isolated at the fixed pressure value (which may be adjusted as described above), the first and second accumulators 356, 358 and optionally the first and second restriction valves 362, 364 can dampen the response of the hydraulic cylinders 330, 336 to any bumps and dips in the ground surface encountered by the respective gauge wheel. By providing an accumulator for each hydraulic cylinder 330, 336, the two gauge wheels can float relative to each other.

In the third phase, a height of the header may be adjusted. The pressure set-point control valve 352 may be an adjustable valve, for example, such that the pressure set-point control valve 352 may be an adjustable pressure relief valve. To adjust the fixed pressure value to a new fixed pressure value, the controller 340 may set the two-position valve 342 to the open position 344 and output a pressure set-point signal to adjust the pressure set point of the pressure set-point control valve 352 to correspond to the new fixed pressure value. The controller 340 may then set the two-position valve 342 to the closed position 348. The controller 340 may set the two-position valve 342 to the closed position 348 in response to one or more sensor signals indicating that the hydraulic system 334 has adjusted to the new fixed pressure value. Adjusting the fixed pressure value will adjust the clearance height of the header due to the corresponding adjustment to the extension force in the hydraulic cylinders 330, 336.

In some examples, the controller 340 may receive a height-setting-signal, for example from a user interface in the operator cab of the agricultural vehicle. In some examples, the height-setting-signal may comprise a header height set-point. In examples employing one or more position sensors 366, 368, the controller 340 may determine the clearance height of the header based on the position sensor signal from the one or more position sensors 366, 368. The controller 340 may determine the clearance height by averaging the position sensor signal over a fixed time period which can allow for an uneven ground surface. The controller 340 may output the pressure set-point signal to adjust the pressure set-point of the pressure set-point control valve 352 until the clearance height indicated by the position sensor signals from the one or more position sensors equals the header height set-point.

In examples not including a position sensor 366, 368, the controller 340 may calculate the pressure set-point or the fixed pressure value based on the header height set-point. For example, the controller 340 may use a look-up table or a known relationship between the pressure set-point / fixed pressure value and the clearance height of the header to calculate the pressure set-point from the header height set-point. The controller 340 may calculate the pressure set-point or the fixed pressure value based on one or more further parameters including soil condition, header type, header weight etc. In some examples, the height-setting-signal can comprise the pressure set-point or the fixed pressure value. The controller may calculate or receive the pressure set-point and output the pressure set-point signal accordingly. The controller 340 may calculate or receive the fixed pressure value and output the pressure set-point signal to adjust the pressure set-point control valve 352 until a pressure sensor signal from the one or more pressure signals indicates a pressure equal to the fixed pressure value.

In some examples, the controller 340 may output a height-indication-signal, for example the controller 340 may output a height-indication signal to the operator cab of the agricultural vehicle for display on a display screen or meter of the operator cab. The height-indication-signal may comprise one or more of: the fixed pressure value as indicated by the one or more pressure sensors; the pressure set-point; and the clearance height of the header. The clearance height of the header may be determined based on the position sensor signal from the one or more position sensors 366, 368 or estimated based on the pressure set-point and the look-up table, predetermined relationship and/or one or more further parameters described above. Outputting the height indication signal can provide direct feedback to the operator of the agricultural vehicle. For example, the operator may determine that the height of the header is too high or too low and requires adjustment. In some examples, the operator may determine that an adjustment to the header height is required by visual observation of the process - e.g. observing soil intake indicating the header is too low, or observing a cut height is too high. The operator can then input a height setting signal for adjusting the clearance height of the header accordingly.

The fourth phase may correspond to the end of crop processing, when the operator is ready to remove the header from the agricultural vehicle. The enable signal, EN, may be set low or removed, for example the operator control unit in the operator cab of the agricultural vehicle may set the enable signal low in response to a command from the operator. In response, the controller 340 may set the two-position valve 342 to the open position 344 and connect the input 350 of the hydraulic system 334 to a reservoir / drain. As a result, pressure is discharged from the cylinder control module 337 and the extension force is removed. The biasing force of the biasing elements 328, 338 retract the respective hydraulic cylinders 330, 336 to the retracted configuration thereby positioning the gauge wheel assemblies in the transport configuration.

Throughout the present specification, the descriptors relating to relative orientation and position, such as "horizontal", "vertical", "top", "bottom" and "side", are used in the sense of the orientation of the header and header assembly as presented in the drawings. However, such descriptors are not intended to be in any way limiting to an intended use of the described or claimed invention.

It will be appreciated that any reference to "close to", "before", "shortly before", "after" "shortly after", "higher than", or "lower than", etc, can refer to the parameter in question being less than or greater than a threshold value, or between two threshold values, depending upon the context.

## Claims

1. A header assembly (200) for an agricultural vehicle, the header assembly comprising:
a header (201) comprising a lower surface (203); and
at least one gauge wheel assembly comprising:
a gauge wheel (222); and
a coupling mechanism (226) coupling the gauge wheel (222) to the header (201), the coupling mechanism including:
a hydraulic cylinder (230) configured to selectively extend from a retracted configuration towards an extended configuration to urge a lower edge of the gauge wheel (222) below and away from the lower surface of the header (203); **characterized in that** the coupling mechanism further includes:
a biasing element (228) arranged to bias the hydraulic cylinder (230) to the retracted configuration.

2. The header assembly (200) of claim 1, wherein the biasing element (228) is arranged to bias the hydraulic cylinder (230) to the retracted configuration in the absence of the selective extension.

3. The header assembly (200) of claim 1 or claim 2, further comprising a hydraulic system (334) configured to selectively provide a fixed pressure to the hydraulic cylinder (230, 330) to selectively extend the hydraulic cylinder towards the extended configuration.

4. The header assembly (200) of claim 3, wherein the hydraulic system (334) comprises at least one accumulator (356, 358) for charging to the fixed pressure, such that the at least one accumulator maintains the fixed pressure in the hydraulic cylinder (230, 330).

5. The header assembly (200) of claim 4, wherein the hydraulic system (334) comprises a two-position valve (342) for selectively isolating the at least one accumulator (356, 358) and the hydraulic cylinder (230, 330) from the rest of the hydraulic system (334).

6. The header assembly (200) of any of claims 3 to 5, wherein the hydraulic system (334) comprises a pressure set-point control valve (352) configured to set a value of the fixed pressure.

7. The header assembly (200) of claim 6, wherein the header assembly further comprises a controller (340), wherein the controller is configured to:
receive a height setting signal; and
output a pressure set-point signal for setting a pressure set-point of the pressure set point control valve (352), based on the height setting signal.

8. The header assembly (200) of claim 7, further comprising a position sensor (366, 368) for monitoring an extension of the hydraulic cylinder (230, 330), wherein the height setting signal comprises a height set-point and the controller (340) is configured to:
receive a position sensor signal from the position sensor (366, 368);
output the pressure set-point signal to adjust the pressure set-point until the position sensor signal indicates an extension of the hydraulic cylinder (230, 330) corresponding to the height set-point.

9. The header assembly (200) of claim 7, wherein the height setting signal comprises a height set point and the controller (340) is configured to:
calculate the pressure set-point based on the height set-point and a predetermined relationship between the pressure set point and the height set point; and
output the pressure set-point signal to the pressure set-point control valve (352) based on the calculated pressure set-point.

10. The header assembly (200) of claim 7, further comprising a pressure sensor for monitoring the value of the fixed pressure, wherein the height setting signal comprises a height set point and the controller (340) is configured to:
calculate the value of the fixed pressure based on the height set-point and a predetermined relationship between the value of the fixed pressure and the height set point;
receive a pressure sensor signal from the pressure sensor; and
output the pressure set-point signal to adjust the pressure set-point until the pressure sensor signal indicates a pressure corresponding to the value of the fixed pressure.

11. The header assembly (200) of any of claims 7 to 10, wherein the two-position valve (342) is arranged to selectively couple the pressure set-point control valve (352) to the at least one accumulator (356, 358) and the hydraulic cylinder (230, 330), wherein the controller (340) is configured to:
control the two-position valve (342) to couple the pressure set-point control valve (352) to the at least one accumulator (356, 358) and the hydraulic cylinder (230, 330); and
control the two-position valve (342) to isolate the pressure set-point control valve (352) from the at least one accumulator (356, 358) and the hydraulic cylinder 230, 330).

12. The header assembly (200) of any of claims 1 to 6, further comprising at least one sensor, wherein the at least one sensor comprises:
a position sensor (366, 368) for sensing an extension of the hydraulic cylinder (230, 330); and
one or more pressure sensors for sensing a pressure of the hydraulic system (334).

13. The header assembly (200) of claim 12, further comprising a controller (340) configured to output a height indication signal based on a sensor signal from the at least one sensor.

14. The header assembly (200) of any preceding claim, wherein the at least one gauge wheel assembly comprises a first gauge wheel assembly positioned at a first end of the header (201) and a second gauge wheel assembly positioned at a second end of the header, opposite the first end.

15. The header assembly (200) of claim 14, wherein the at least one accumulator comprises a first accumulator (356) for maintaining a fixed pressure in the hydraulic cylinder (230, 330) of the first gauge wheel assembly and a second accumulator (358) for maintaining a fixed pressure in the hydraulic cylinder (336) of the second gauge wheel assembly.

## Patentansprüche

1. Vorsatzanordnung (200) für ein landwirtschaftliches Fahrzeug, wobei die Vorsatzanordnung Folgendes aufweist:
einen Vorsatz (201) mit einer Unterseite (203); und
mindestens eine Tastradbaugruppe, die Folgendes aufweist:
ein Tastrad (222); und
einen Kopplungsmechanismus (226), der das Tastrad (222) mit dem Vorsatz (201) koppelt, wobei der Kopplungsmechanismus Folgendes umfasst:
einen Hydraulikzylinder (230), der dazu eingerichtet ist, sich wahlweise von einer eingefahrenen Konfiguration in Richtung einer ausgefahrenen Konfiguration zu erstrecken, um eine Unterkante des Tastrads (222) unterhalb der Unterseite des Vorsatzes (203) und von dieser weg zu drücken;
**dadurch gekennzeichnet, dass** der Kopplungsmechanismus des Weiteren ein Vorspannelement (228) umfasst, das dazu eingerichtet ist, den Hydraulikzylinder (230) in die eingefahrene Konfiguration vorzuspannen.

2. Vorsatzanordnung (200) nach Anspruch 1, wobei das Vorspannelement (228) dazu eingerichtet ist, den Hydraulikzylinder (230) in die eingefahrene Konfiguration vorzuspannen, wenn keine wahlweise Ausdehnung erfolgt.

3. Vorsatzanordnung (200) nach Anspruch 1 oder 2, das des Weiteren ein Hydrauliksystem (334) aufweist, das dazu eingerichtet ist, dem Hydraulikzylinder (230, 330) wahlweise einen festen Druck bereitzustellen, um den Hydraulikzylinder wahlweise in Richtung der ausgefahrenen Konfiguration auszudehnen.

4. Vorsatzanordnung (200) nach Anspruch 3, wobei das Hydrauliksystem (334) mindestens einen Akkumulator (356, 358) umfasst, der auf den festen Druck aufgeladen ist, sodass der mindestens eine Akkumulator den festen Druck im Hydraulikzylinder (230, 330) aufrechterhält.

5. Vorsatzanordnung (200) nach Anspruch 4, wobei das Hydrauliksystem (334) ein Zweiwegventil (342) umfasst, um wahlweise den mindestens einen Akkumulator (356, 358) und den Hydraulikzylinder (230, 330) vom restlichen Hydrauliksystem (334) zu isolieren.

6. Vorsatzanordnung (200) nach einem der Ansprüche 3 bis 5, wobei das Hydrauliksystem (334) ein Druck-Sollwertregelventil (352) aufweist, das dazu eingerichtet ist, einen Wert des festen Drucks festzulegen.

7. Vorsatzanordnung (200) nach Anspruch 6, wobei die Vorsatzanordnung des Weiteren eine Steuereinrichtung (340) aufweist, wobei die Steuereinrichtung dazu eingerichtet ist:
ein Höheneinstellsignal zu empfangen; und
ein Druck-Sollwertsignal zur Festlegung eines Drucksollwerts des Druck-Sollwertregelventils (352) basierend auf dem Höheneinstellsignal auszugeben.

8. Vorsatzanordnung (200) nach Anspruch 7, die des Weiteren einen Positionssensor (366, 368) zur Überwachung einer Ausdehnung des Hydraulikzylinders (230, 330) aufweist, wobei das Höheneinstellsignal einen Höhensollwert umfasst und die Steuereinrichtung (340) dazu eingerichtet ist:
ein Positionssensorsignal vom Positionssensor (366, 368) zu empfangen;
das Druck-Sollwertsignal auszugeben, um den Drucksollwert so anzupassen, dass das Positionssensorsignal eine Ausdehnung des Hydraulikzylinders (230, 330) anzeigt, die dem Höhensollwert entspricht.

9. Vorsatzanordnung (200) nach Anspruch 7, wobei das Höheneinstellsignal einen Höhensollwert umfasst und die Steuereinrichtung (340) dazu eingerichtet ist:
den Drucksollwert basierend auf dem Höhensollwert und einer vorgegebenen Beziehung zwischen dem Drucksollwert und dem Höhensollwert zu berechnen; und
das Druck-Sollwertsignal basierend auf dem berechneten Drucksollwert an das Druck-Sollwertregelventil (352) auszugeben.

10. Vorsatzanordnung (200) nach Anspruch 7, die des Weiteren einen Drucksensor zur Überwachung des Werts des festen Drucks aufweist, wobei das Höheneinstellsignal einen Höhensollwert umfasst und die Steuereinrichtung (340) dazu eingerichtet ist:
den Wert des festen Drucks basierend auf dem Höhensollwert und einer vorgegebenen Beziehung zwischen dem Wert des festen Drucks und dem Höhensollwert zu berechnen;
ein Drucksensorsignal vom Drucksensor zu empfangen; und
das Druck-Sollwertsignal so auszugeben, dass der Drucksollwert angepasst wird, bis das Drucksensorsignal einen Druck anzeigt, der dem Wert des festen Drucks entspricht.

11. Vorsatzanordnung (200) nach einem der Ansprüche 7 bis 10, wobei das Zweiwegventil (342) dazu eingerichtet ist, das Druck-Sollwertregelventil (352) wahlweise mit dem mindestens einen Akkumulator (356, 358) und dem Hydraulikzylinder (230, 330) zu koppeln, wobei die Steuereinrichtung (340) dazu eingerichtet ist:
das Zweiwegventil (342) so zu steuern, dass das Druck-Sollwertregelventil (352) mit dem mindestens einen Akkumulator (356, 358) und dem Hydraulikzylinder (230, 330) gekoppelt ist; und
das Zweiwegventil (342) so zu steuern, dass das Druck-Sollwertregelventil (352) vom mindestens einen Akkumulator (356, 358) und dem Hydraulikzylinder (230, 330) isoliert ist.

12. Vorsatzanordnung (200) nach einem der Ansprüche 1 bis 6, die des Weiteren mindestens einen Sensor aufweist, wobei der mindestens eine Sensor Folgendes umfasst:
einen Positionssensor (366, 368) zur Erfassung einer Ausdehnung des Hydraulikzylinders (230, 330); und
einen oder mehrere Drucksensoren zur Erfassung eines Drucks des Hydrauliksystems (334).

13. Vorsatzanordnung (200) nach Anspruch 12, die des Weiteren eine Steuereinrichtung (340) aufweist, die dazu eingerichtet ist, basierend auf einem Sensorsignal des mindestens einen Sensors ein Höhenanzeigesignal auszugeben.

14. Vorsatzanordnung (200) nach einem der vorhergehenden Ansprüche, wobei die mindestens eine Tastradbaugruppe eine erste Tastradbaugruppe an einem ersten Ende des Vorsatzes (201) und eine zweite Tastradbaugruppe an einem dem ersten Ende gegenüberliegenden zweiten Ende des Vorsatzes aufweist.

15. Vorsatzanordnung (200) nach Anspruch 14, wobei der mindestens eine Akkumulator einen ersten Akkumulator (356) zur Aufrechterhaltung eines festen Drucks im Hydraulikzylinder (230, 330) der ersten Tastradbaugruppe und einen zweiten Akkumulator (358) zur Aufrechterhaltung eines festen Drucks im Hydraulikzylinder (336) der zweiten Tastradbaugruppe aufweist.

## Revendications

1. Un ensemble organe de coupe (200) pour un véhicule agricole, l'ensemble organe de coupe comprenant :
un organe de coupe (201) comprenant une surface inférieure (203) ; et
au moins un ensemble roue de jauge comprenant :
une roue de jauge (222) ; et
un mécanisme d'accouplement (226) couplant la roue de jauge (222) à l'organe de coupe (201), le mécanisme d'accouplement incluant :
un vérin hydraulique (230) configuré pour s'étendre de manière sélective d'une configuration rétractée à une configuration étendue afin de solliciter un bord inférieur de la roue de jauge (222) en dessous et à l'écart de la surface inférieure de l'organe de coupe (203) ;
**caractérisé en ce que** le mécanisme d'accouplement inclut en outre :
un élément de sollicitation (228) agencé pour solliciter le vérin hydraulique (230) dans la configuration rétractée.

2. L'ensemble organe de coupe (200) selon la revendication 1, dans lequel l'élément de sollicitation (228) est agencé pour solliciter le vérin hydraulique (230) dans la configuration rétractée en l'absence de l'extension sélective.

3. L'ensemble organe de coupe (200) selon la revendication 1 ou la revendication 2, comprenant en outre un système hydraulique (334) configuré pour fournir de manière sélective une pression fixe au vérin hydraulique (230, 330) afin d'étendre de manière sélective le vérin hydraulique vers la configuration étendue.

4. L'ensemble organe de coupe (200) selon la revendication 3, dans lequel le système hydraulique (334) comprend au moins un accumulateur (356, 358) pour charger à la pression fixe, de sorte que l'au moins un accumulateur maintient la pression fixe dans le vérin hydraulique (230, 330).

5. L'ensemble organe de coupe (200) selon la revendication 4, dans lequel le système hydraulique (334) comprend une vanne à deux positions (342) pour isoler de manière sélective l'au moins un accumulateur (356, 358) et le vérin hydraulique (230, 330) du reste du système hydraulique (334).

6. L'ensemble organe de coupe (200) selon l'une quelconque des revendications 3 à 5, dans lequel le système hydraulique (334) comprend une vanne de régulation de point de consigne de pression (352) configurée pour définir une valeur de la pression fixe.

7. L'ensemble organe de coupe (200) selon la revendication 6, dans lequel l'ensemble organe de coupe comprend en outre un dispositif de commande (340), dans lequel le dispositif de commande est configuré pour :
recevoir un signal de réglage de hauteur ; et
émettre un signal de point de consigne de pression pour régler un point de consigne de pression de la vanne de régulation de point de consigne de pression (352), en fonction du signal de réglage de hauteur.

8. L'ensemble organe de coupe (200) selon la revendication 7, comprenant en outre un capteur de position (366, 368) pour surveiller une extension du vérin hydraulique (230, 330), dans lequel le signal de réglage de hauteur comprend un point de consigne de hauteur et le dispositif de commande (340) est configuré pour :
recevoir un signal de capteur de position de la part du capteur de position (366, 368) ;
émettre le signal de point de consigne de pression pour ajuster le point de consigne de pression jusqu'à ce que le signal de capteur de position indique une extension du vérin hydraulique (230, 330) correspondant au point de consigne de hauteur.

9. L'ensemble organe de coupe (200) selon la revendication 7, dans lequel le signal de réglage de hauteur comprend un point de consigne de hauteur et le dispositif de commande (340) est configuré pour :
calculer le point de consigne de pression en fonction du point de consigne de hauteur et d'une relation prédéterminée entre le point de consigne de pression et le point de consigne de hauteur ; et
transmettre le signal de point de consigne de pression à la vanne de régulation de point de consigne de pression (352) en fonction du point de consigne de pression calculé.

10. L'ensemble organe de coupe (200) selon la revendication 7, comprenant en outre un capteur de pression pour surveiller la valeur de la pression fixe, dans lequel le signal de réglage de hauteur comprend un point de consigne de hauteur et le dispositif de commande (340) est configuré pour :
calculer la valeur de la pression fixe en fonction du point de consigne de hauteur et d'une relation prédéterminée entre la valeur de la pression fixe et le point de consigne de hauteur ;
recevoir un signal de capteur de pression de la part du capteur de pression ; et
émettre le signal de point de consigne de pression pour ajuster le point de consigne de pression jusqu'à ce que le signal de capteur de pression indique une pression correspondant à la valeur de la pression fixe.

11. L'ensemble organe de coupe (200) selon l'une quelconque des revendications 7 à 10, dans lequel la vanne à deux positions (342) est agencée pour coupler de manière sélective la vanne de régulation de point de consigne de pression (352) à l'au moins un accumulateur (356, 358) et au vérin hydraulique (230, 330), dans lequel le dispositif de commande (340) est configuré pour :
commander la vanne à deux positions (342) pour coupler la vanne de régulation de point de consigne de pression (352) à l'au moins un accumulateur (356, 358) et au vérin hydraulique (230, 330) ; et
commander la vanne à deux positions (342) pour isoler la vanne de régulation de point de consigne de pression (352) de l'au moins un accumulateur (356, 358) et du vérin hydraulique (230, 330).

12. L'ensemble organe de coupe (200) selon l'une quelconque des revendications 1 à 6, comprenant en outre au moins un capteur, dans lequel l'au moins un capteur comprend :
un capteur de position (366, 368) pour détecter une extension du vérin hydraulique (230, 330) ; et
un ou plusieurs capteurs de pression pour détecter une pression du système hydraulique (334).

13. L'ensemble organe de coupe (200) selon la revendication 12, comprenant en outre un dispositif de commande (340) configuré pour émettre un signal d'indication de hauteur en fonction d'un signal de capteur provenant de l'au moins un capteur.

14. L'ensemble organe de coupe (200) selon l'une quelconque des revendications précédentes, dans lequel l'au moins un ensemble roue de jauge comprend un premier ensemble roue de jauge positionné à une première extrémité de l'organe de coupe (201) et un second ensemble roue de jauge positionné à une seconde extrémité de l'organe de coupe, à l'opposé de la première extrémité.

15. L'ensemble organe de coupe (200) selon la revendication 14, dans lequel l'au moins un accumulateur comprend un premier accumulateur (356) pour maintenir une pression fixe dans le vérin hydraulique (230, 330) du premier ensemble roue de jauge et un second accumulateur (358) pour maintenir une pression fixe dans le vérin hydraulique (336) du second ensemble roue de jauge.
